# EUROPEAN PATENT APPLICATION

(11) **EP 1 645 493 A1**
(43) Date of publication of application: **12.04.2006**
(21) Application number: 05007715.5
(22) Date of filing: 08.04.2005
(51) Int. Cl.: B62D 33/06

(54) **Load support apparatus of driving room for construction equipment and manufacturing method thereof**

(30) Priority: 06.10.2004 KR 2004079428
(71) Applicant: Volvo Construction Equipment Holding Sweden AB, 631 85 Eskilstuna (SE)
(72) Inventor: Yoon, Chun Jin, Banlim-dong, Changwon (KR)
(74) Representative: Weitzel, Wolfgang

(57) **Abstract**

Disclosed is a load support apparatus of a driving room (122) for a construction equipment in which a fitting boss is previously provided at the base of a vehicle frame (100) to simply fix and detach the vehicle frame (100) without disassembling the driving room in case that the vehicle frame (100) has a closed structure, and the regulation member (140) screwed onto the fitting boss (142) is fixed to a bottom plate (110) from the bottom frame (120) of the driving room (122). The load support apparatus includes the vehicle frame (100) provided in a lower carriage, the driving room loaded in the vehicle frame, having the bottom frame at the lower portion, a vibration damper (130) provided between the vehicle frame (100) and the bottom frame, elastically supporting the driving room (122), and a regulation member (140) fixed to the vehicle frame (100) from the bottom frame (120) of the driving room even after assembly of the driving room is finished.

## Description

### BACKGROUND OF THE INVENTION

### Field of the Invention

The present invention relates to a load support apparatus of a driving room for a construction equipment and a manufacturing method thereof, and more particularly to, a load support apparatus in which a fitting portion at one side is detachably fixed to a vehicle frame and a detachment prevention portion at the other side is positioned above a bottom frame of the driving room so that the load support apparatus is fixed to the vehicle frame from the bottom frame of the driving room even after assembly of the driving room is finished.

### Description of the Related Art

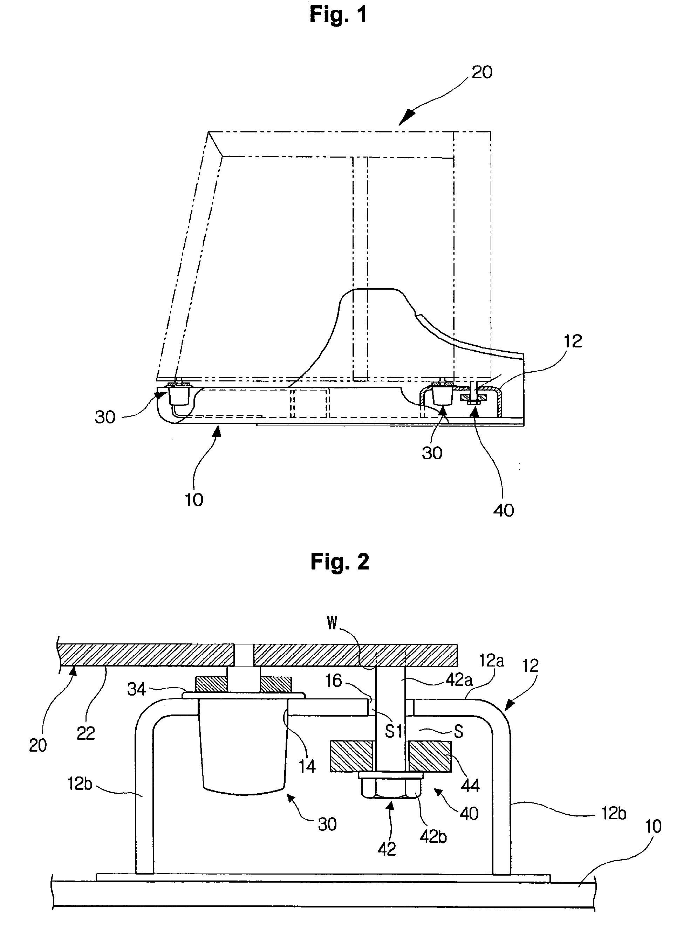

A related art cap support structure, as shown in FIG. 1 and FIG. 2, includes a regulation member 30 elastically supporting a cap 20 against a vehicle frame 10 and a vibration damper 40 restricting a predetermined displacement only when the displacement occurs in the cap 20 in an extension direction of the regulation member 30. In this structure, the cap 20 is supported in a state that it is spaced apart from the vehicle frame 10.

To this end, a support frame 12 is provided above the vehicle frame 10. The support frame 12 includes an upper wall 12a and a leg portion 12b vertically extended from the front end and the rear end of the upper wall 12a. The upper wall 12a is provided with a through hole 14 fixing the regulation member 30 and a through hole 16 fixing the vibration damper 40.

As shown in FIG. 1, the regulation member 30 includes an outer flange 34 formed at an upper opening, and is fixed to the support frame 12. The outer flange 34 is fixed to the upper wall 12a through a bolt member (not shown) in a state that it is fitted into the through hole 14 of the upper wall 12a.

As described above, the cap 20 is supported to the vehicle frame 10 through the regulation member 30 at four corners of a bottom frame 22, and damps impact from the vehicle frame 10. However, if a construction equipment is over rolled or collides with rock or trees, great impact acts on the cap 20. Therefore, the cap support structure is provided with the vibration damper 40 that protects a worker or the cap 20 from the impact.

The vibration damper 40, as shown in FIG. 2, includes a shaft member 42 and a stopper 44 arranged to downwardly pierce the shaft member 42. The shaft member 42 includes a bolt member consisting of a shaft portion 42a and a head portion 42b. The shaft portion 42a is fitted to the bottom frame 22. At this time, the stopper 44 is interposed in the head portion 42b.

In a state that the cap 20 is supported by four regulation members 30 and vibration or impact is generated from the vehicle frame 10, a clearance S is formed between an upper surface of the stopper 44 and a lower surface of the upper wall 12a and a clearance S1 between the outer circumference of the shaft member 42a and the inner circumference of the through hole 16.

Therefore, if the cap 20 is displaced to be away from the vehicle frame 10, the vibration damper 40 allows such displacement until the upper surface of the stopper 44 adjoins the lower surface of the upper wall 12a. Further, if the cap 20 is displaced to be close to the vehicle frame 10, the vibration damper 40 allows such displacement until the lower surface of the bottom frame 22 adjoins the upper surface of the upper wall 12a. Moreover, if the cap 20 is displaced in parallel to the vehicle frame 10, the vibration damper 40 allows such displacement until the outer circumference of the shaft member 42a adjoins the inner circumference of the through hole 16.

However, the related art regulation member of a driving room for a construction equipment and a manufacturing method thereof have several problems.

The regulation member 30 is fixed to the front and the rear of the vehicle frame 10 fixed onto a lower carrier (not shown) of the construction equipment by a fitting means such as a bolt. In this case, one side of the vibration damper 40 has to be fixed to the base of the bottom frame 22 by welding before the bottom frame 22 is fixed to the regulation member 30. However, it is difficult to fix the regulation member to the base of the bottom frame 22 because the support frame 12 has a closed structure.

Furthermore, since the support frame 12 has a closed structure, the vibration damper 40 should be exchanged with a new one or should additionally be provided even after the bottom frame 22 is finally fixed to the regulation member 30. At this time, it is difficult to fix the vibration damper 40 without disassembling the cap 20.

By contrast, since the stopper 44 of the vibration damper 40 is provided to pierce the through hole 16 and the other side 'w' is fixed to the base of the bottom frame 22 by welding, the vibration damper 40 should be cut or removed from the bottom frame 22 to disassemble the cap 20 after finishing assembly of the cap 20. Therefore, it is impossible to use the vibration damper 40 again.

Moreover, if the vibration damper 40 is fixed to the base of the bottom frame 22 by welding, the fitting portion 'w' by welding may be damaged by tension or a cutting force when external impact is given thereto, thereby failing to support the load with the vibration damper 40.

### SUMMARY OF THE INVENTION

Accordingly, the present invention is directed to a load support apparatus of a driving room for a construction equipment and a manufacturing method thereof that substantially obviates one or more problems due to limitations and disadvantages of the related art.

An object of the present invention is to provide a load support apparatus of a driving room for a construction equipment and a manufacturing method thereof in which the load support apparatus is simply detached from the construction equipment even in case that a vehicle frame has a closed structure.

Another object of the present invention is to provide a load support apparatus of a driving room for a construction equipment and a manufacturing method thereof in which the load support apparatus is simply exchanged with a new one or separately provided even after assembly of the driving room is finished.

Another object of the present invention is to provide a load support apparatus of a driving room for a construction equipment and a manufacturing method thereof in which the load support apparatus can be used again even in case that the driving room is disassembled.

Another object of the present invention is to provide a load support apparatus of a driving room for a construction equipment and a manufacturing method thereof in which a fitting portion of the load support apparatus is not damaged by tension or a cutting force in spite of external impact.

To achieve these objects and other advantages and in accordance with the purpose of the invention, as embodied and broadly described herein, a load support apparatus of a driving room for a construction equipment includes a vehicle frame rotatably provided in a lower carriage, a driving room loaded in the vehicle frame, having a bottom frame at the lower portion, a vibration damper provided between the vehicle frame and the bottom frame, elastically supporting the driving room against the vehicle frame, and a regulation member having a fitting portion at one side and a detachment prevention portion at the other side, wherein the fitting portion of the regulation member is detachably fixed to the vehicle frame, the detachment prevention portion is positioned to pierce the bottom frame, and the regulation member is fixed to the vehicle frame from the bottom frame of the driving room even after assembly of the driving room is finished.

Preferably, the load support apparatus further includes a hollow shaped cylinder-fitting boss fixed to an upper plate of the vehicle frame in a single body, the fitting boss having a screw portion therein, and the fitting portion has a screw portion screwed onto the fitting boss.

Preferably, the detachment prevention portion is a bolt having a head portion.

Preferably, the detachment prevention portion further includes a ring shaped stopper plate fixed to the regulation member in a single body.

Preferably, the load support apparatus further includes a rotation prevention device to prevent the regulation member from being gotten loose, the rotation prevention device including a rotation prevention plate having a fitting side fixed to one side of the vehicle frame and an extension side extended to the upper plate of the vehicle frame, the extension side having a groove with at least one straight line portion, and a cylinder shaped rotation prevention boss fixed between the fitting portion and the detachment prevention portion of the regulation member in a sing body, having a rotation prevention portion at the outer circumference to correspond to the straight-line portion.

Preferably, the load support apparatus further includes a sealing device including a cylinder boot which is elastic up and down, the cylinder boot being provided between the bottom frame of the driving room and the detachment prevention portion to maintain sealing of the driving room.

Preferably, the boot has a plurality of bellows that are elastic up and down.

Preferably, the boot is made of elastic material, an upper end of the boot being tightly fixed to an outer circumference of the detachment prevention portion and a lower end of the boot being tightly fixed to an inner circumference of a through hole of the bottom frame.

Preferably, the outer circumference of the detachment prevention portion and the inner circumference of the through hole of the bottom frame are flaked.

Preferably, the detachment prevention portion is provided with a groove at the outer circumference and the boot is provided with a protrusion at the inner side of the upper end so that the protrusion is inserted into the groove, and the bottom frame is further provided with a fitting member having an annular groove so that the lower end of the boot is fixed to the annular groove.

Preferably, the load support apparatus is provided at the outer side of the vibration damper.

Preferably, the quantity and the position of the load support apparatus are selectively determined depending on load condition.

In another aspect, a method for manufacturing a load support apparatus of a driving room for a construction equipment includes the steps of fixing a hollow shaped fitting boss having a thread therein to the base of an upper frame of a vehicle frame provided with a first through hole in a single body by welding, fixing a vibration damper, which elastically supports the driving room against the vehicle frame, to the vehicle frame, fixing a bottom frame of the driving room provided with a third through hole to an upper portion of the vibration damper, and inserting a regulation member into a third through hole and a first through hole in due order, the regulation member having a screw portion at one side and a detachment prevention portion at the other side, so that the screw portion is screwed onto a thread of the fitting boss.

Preferably, the method further includes the step of fixing a bottom plate provided with a second through hole between the step of fixing the vibration damper and the step of fixing the bottom frame of the driving room.

Preferably, the method further includes the step of preparing a rotation prevention device including a fitting side fixed to one side of the vehicle frame and an extension side extended to the upper plate of the vehicle frame, the extension side having a groove with at least one straight line portion, and a cylinder shaped rotation prevention boss fixed between the screw portion of the regulation member and the detachment prevention portion in a sing body, having a rotation prevention portion at the outer circumference to correspond to the straight-line portion.

Preferably, the method further includes the step of preparing a sealing device including a cylinder boot which is elastic up and down, the cylinder boot being provided between the bottom frame of the driving room and the detachment prevention portion to maintain sealing of the driving room.

In the load support apparatus of a driving room for a construction equipment and a manufacturing method thereof, the load support apparatus can simply and firmly befixed to or detached from the driving room.

It is to be understood that both the foregoing general description and the following detailed description of the present invention are exemplary and explanatory and are intended to provide further explanation of the invention as claimed.

### BRIEF DESCRIPTION OF THE DRAWINGS

The above aspects and features of the present invention will be more apparent by describing certain embodiments of the present invention with reference to the accompanying drawings, in which:

FIG. 1 is a sectional view illustrating a structure of a related art load support apparatus of a driving room for a construction equipment;

FIG. 2 is a sectional view illustrating main parts of a related art load support apparatus of a driving room for a construction equipment;

FIG. 3 is a sectional view illustrating a structure of a load support apparatus and a rotation prevention device in a driving room for a construction equipment according to the present invention;

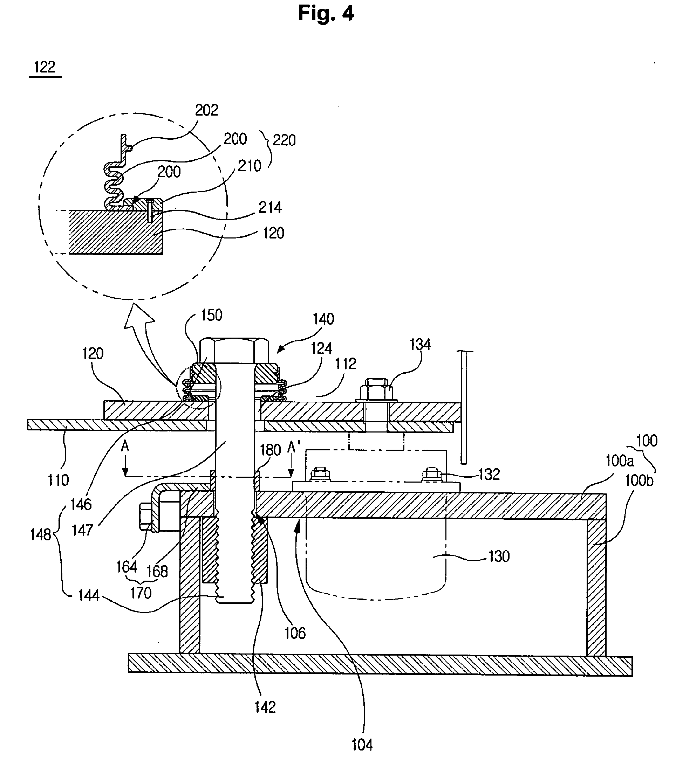

FIG. 4 is a sectional view illustrating a structure of a load support apparatus, a rotation prevention device, and a sealing device in a driving room for a construction equipment according to the present invention;

FIG. 5 is an exploded perspective view illustrating a structure of a load support apparatus, a rotation prevention device, and a sealing device in a driving room for a construction equipment according to the present invention; and

FIG. 6 is a sectional view taken along line A-A' of FIG. 3.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

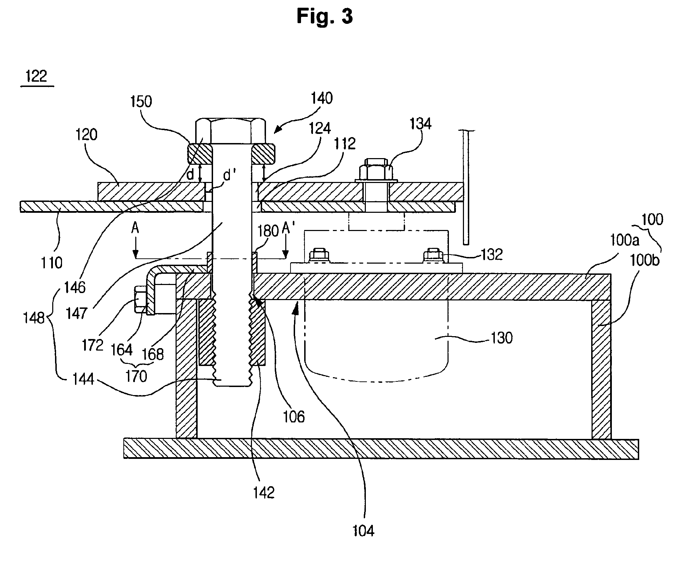

As shown in FIG. 3, a load support apparatus of a driving room for a construction equipment according to the present invention includes a vehicle frame 100 rotatably provided in a lower carriage (not shown), a bottom plate 110 loaded in the vehicle 100, a bottom frame 120 of a driving room 122 fixed to the upper portion of the bottom plate 110, a vibration damper 130 provided between the vehicle frame 100 and the bottom plate 110, and a regulation member 140 preventing the driving room from being detached from the construction equipment and being gotten loose in case of emergency such as over roll of the construction equipment.

The vibration damper 130 is to improve riding by damping impact indirectly transferred to the driving room 122 in case that the construction equipment travels or runs. The vibration damper 130 is fixed to the vehicle frame 100 by a vehicle frame fitting means 132 such as bolt. The vibration damper 130 is also fixed to the bottom frame 120 and the bottom plate 110 by a bottom frame fitting means 134 such as bolt.

Therefore, the vibration damper 130 serves to fix the bottom frame 120 to the vehicle frame 110 and at the same time damp impact of the vehicle frame 100. In the present invention, the vibration damper 130 is preferably provided inside the regulation member 140 to prevent its damping function from being lost beyond elastic limit.

The regulation member 140 includes a hollow shaped cylinder-fitting boss 142, a bolt 148, and a stopper plate 150. The fitting boss 142 is formed in a single body with the vehicle frame 100 and has a female thread therein. The bolt 148 includes a screw portion 144 screwed onto the fitting boss 142, a head portion 146 radially extended, having a polygonal shape at the outer circumference, and a main body 147 connecting the screw portion 144 with the head portion 146. The stopper plate 150 is provided below the head portion 146.

The vehicle frame 100 includes an upper frame 100a having a fixing hole 104 for fixing the vibration damper 130, a first through hole 106 for the screw portion 144 of the bolt 148, and a side frame 100b supporting the upper frame 100a to the vehicle body. The upper frame 100a and the side frame 100b have a closed structure. Accordingly, the fitting boss 142 is fixed to one side at the base of the upper frame 100a by welding before the upper frame 100a and the side frame 100b are assembled into the vehicle body.

Meanwhile, a second through hole 112 and a third through hole 124 are respectively formed in the bottom plate 110 and the bottom frame 120 to correspond to the first through hole 106, so that the screw portion 144 is inserted thereto.

The stopper plate 150 has a ring shape. Its inner diameter is equal to or greater than that of the screw portion 144 while its outer diameter is greater than those of the second through hole 112 and the third through hole 122. The stopper plate 150 is fixed to the bolt 148 in a single body by welding or assembly.

The structure that the stopper plate 150 is fixed to the head portion 146 or the lower portion of the head portion 146 in a single body is called a detachment prevention portion.

The regulation member 140 of the present invention further includes a rotation prevention device 190. The rotation prevention device 190 includes a rotation prevention plate 170, a rotation prevention means 172, and a cylinder shaped rotation prevention boss 180. The rotation prevention plate 170 includes a fitting side 164 and an extension side 168. The fitting side 164 is provided with a fitting hole 162 at one side. The extension side 168 is extended from the fitting side 164 and has a "⊂" shaped groove formed with a straight-line portion 166 at one side or both sides. The rotation prevention plate 170 has a "¬" shape as a whole. The rotation prevention means 172 is fixed to the fitting hole 162 so that the rotation prevention plate 170 is fixed to the vehicle frame 100. The rotation prevention boss 180 is fixed to the outside of the main body 147 and includes a rotation prevention portion 174. The rotation prevention portion 174 is provided to correspond to the straight-line portion 166 so that the bolt 148 does not rotate.

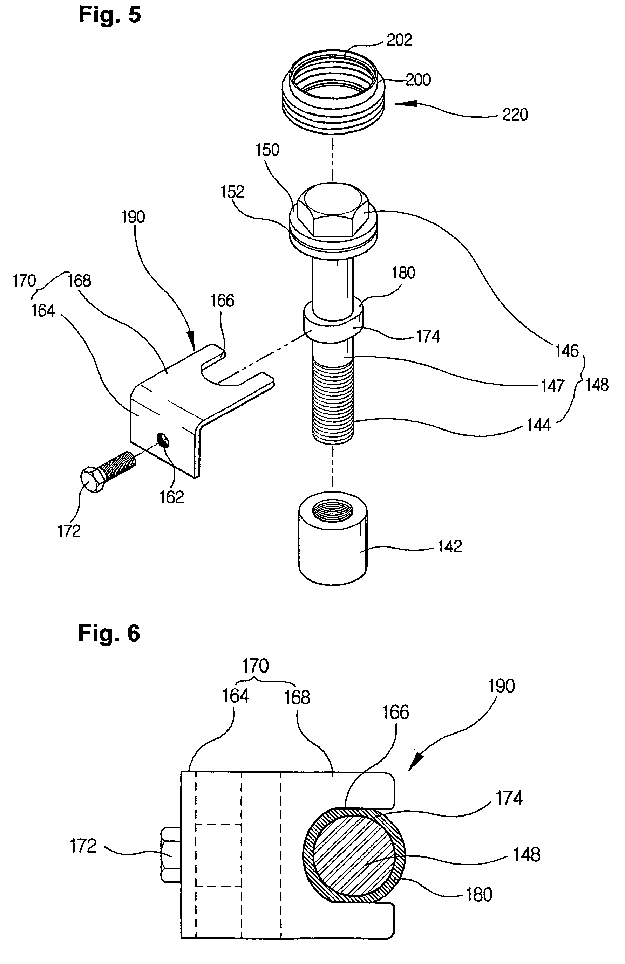

The rotation prevention boss 180 is provided at a predetermined position in a length direction of the screw portion 144. The rotation prevention boss 180 is fixed to the screw portion 144 in a single body by welding. The distance 'd' between the lower surface of the stopper plate 150 and the upper surface of the bottom frame 120 is determined depending on the position of the rotation prevention boss 180. That is, as shown in FIG. 5, load support limit of the regulation member 140 is determined depending on the distance between the lower end of the rotation prevention boss 180 and the lower surface of the stopper plate 150.

The regulation member 140 of the present invention further includes a sealing device 220. The sealing device 220 includes a cylinder boot 200 having a plurality of bellows elastic up and down at an outer wall and a fitting member 210 fixing the boot 200 to the bottom frame 120.

The regulation member 140 usually does not work because the vibration damper 130 damps impact transferred from the vehicle frame 100 to the driving room 122. Therefore, the regulation member 140 works in case of emergency such as the case that the driving room 122 is detached from the vehicle frame 100 at a predetermined distance by external impact.

In other words, the regulation member 140 is to prevent the driving room 122 from being detached from the vehicle frame 100 by firmly supporting the driving room 122 and the vehicle frame 100 if external force is applied to the driving room 122 or a structure for protecting the driving room due to collision during operation or direct impact is applied to the driving room 122 due to over roll of the construction equipment. Particularly, the regulation member 140 is to prevent the driving room 122 from moving in left and right directions and from being upward gotten loose.

Therefore, since the vehicle frame 100 and the driving room 122 usually work regardless of the regulation member 140, the distance d between the detachment prevention portion of the regulation member 140 and the bottom frame 120 of the driving room 122 or the distance d' between the regulation member 140 and the third through hole 124 are maintained at a constant interval.

Noise or dust may be generated when the regulation member 140 is fixed to the vehicle frame 100 and the stopper plate 150 is fixed to the bottom frame 120 of the driving room 122. Such noise or dust may enter the driving room 122 from the vehicle frame 100 through the distances d and d', thereby disturbing safe driving. The sealing device 220 serves to prevent such noise or dust from entering the driving room 122.

The upper end of the boot 200 is fixed to the outer circumference of the stopper plate 150 by various methods. For example, the outer circumference of the stopper plate 150 may be applied with glue. Alternatively, the upper end of the boot 200 may be fixed to the outer circumference of the stopper plate 150 using elasticity of the boot 200. In this case, the outer circumference of the stopper plate 150 or the inner circumference of the boot 200 may be flaked for tight fixation. However, in the embodiment of the present invention, a groove 152 is formed in the outer circumference of the stopper plate 150 and a protrusion 202 is formed in the inner circumference of the boot 200 so that the protrusion 202 is inserted into the groove 152.

The fitting member 210 has a ring shape provided with an annular groove 212 at the bottom. The fitting member 210 is fixed to the bottom frame 120 by a fitting means 214 such as bolt. The lower portion of the boot 200 is inserted into the annular groove 212.

Hereinafter, a method for manufacturing the aforementioned load support apparatus of a driving room for a construction equipment according to the present invention will be described in more detail with reference to the accompanying drawings.

First, the fitting boss 142 is fixed to the base of the upper frame 100a in a single body by welding before the upper frame 100a and the lower frame 100b of the vehicle frame 100 are assembled or the vehicle frame 100 is fixed to the vehicle body.

The bottom plate 110 is fixed onto the vibration damper 130 fixed to the vehicle frame 100 by the fitting means 132.

The fitting member 210 is fixed to the bottom frame 120 of the driving room 122 using the fitting means 214 and then the boot 200 is fixed to the annular groove 212. The bottom frame 120 provided with the boot 200 is fixed onto the bottom plate 110 by the bottom frame fitting means 134.

Subsequently, the regulation member 140 is assembled. At this time, the bolt 148, the stopper plate 150 and the rotation prevention boss 180 are assembled in a single body by welding.

The assembled regulation member 140 is fixed to the fitting boss 142 through the second and third through holes 112 and 124. A male thread of the screw portion 144 of the bolt 148 is firmly screwed onto the female thread of the fitting boss 142. The boot 200 is fixed to the stopper plate 150 by inserting the protrusion 202 of the boot 200 into the groove 152 of the stopper plate 150.

Finally, the rotation prevention device 190 is assembled. The rotation prevention plate 170 is fixed to the vehicle frame 100 by the rotation prevention means 172 after the bolt 148 is adjusted to make the straight-line portion 166 of the rotation prevention plate 170 parallel with the rotation prevention portion 174 of the rotation prevention boss 180.

As described above, the present invention is intended that the fitting boss is previously provided at the base of the vehicle frame to simply detach the vehicle frame without disassembling the driving room in case that the vehicle frame has a closed structure, and the regulation member screwed onto the fitting boss is fixed to the bottom plate from the bottom frame of the driving room.

The load support apparatus of a driving room for a construction equipment and the manufacturing method thereof according to the present invention have the following advantages.

First, since the regulation member is fixed to the vehicle frame from the bottom frame of the driving room, it is possible to simply fix the regulation member even in case that the vehicle frame has a closed structure. In addition, it is possible to simply exchange the regulation member with a new one or separately fix the one even after assembly of the driving room is finished. Further, the regulation member can be used again without modification even in case that the driving room is disassembled. Finally, since the regulation member is screwed onto the fitting boss fixed to the vehicle frame, the fitting portion of the regulation member is not damaged or modified in spite of external impact.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. A load support apparatus of a driving room for a construction equipment comprising:
a vehicle frame rotatably provided in a lower carriage;
a bottom frame of a driving room loaded in the vehicle frame;
a vibration damper provided between the vehicle frame and the bottom frame, elastically supporting the driving room against the vehicle frame; and
a regulation member having a fitting portion at one side and a detachment prevention portion at the other side, wherein the fitting portion of the regulation member is detachably fixed to the vehicle frame, the detachment prevention portion is positioned to pierce the bottom frame, and the regulation member is fixed to the vehicle frame from the bottom frame of the driving room even after assembly of the driving room is finished.

2. The load support apparatus of a driving room for a construction equipment according to claim 1, wherein the load support apparatus further includes a hollow shaped cylinder-fitting boss fixed to an upper plate of the vehicle frame in a single body, the fitting boss having a screw portion therein, and the fitting portion has a screw portion screwed onto the fitting boss.

3. The load support apparatus of a driving room for a construction equipment according to claim 1, wherein the detachment prevention portion is a bolt having a head portion.

4. The load support apparatus of a driving room for a construction equipment according to claim 3, wherein the detachment prevention portion further includes a ring shaped stopper plate fixed to the regulation member in a single body.

5. The load support apparatus of a driving room for a construction equipment according to claim 1 to claim 3, further comprising a rotation prevention device to prevent the regulation member from being gotten loose, the rotation prevention device including:
a rotation prevention plate having a fitting side fixed to one side of the vehicle frame and an extension side extended to the upper plate of the vehicle frame, the extension side having a groove with at least one straight line portion; and
a cylinder shaped rotation prevention boss fixed between the fitting portion and the detachment prevention portion of the regulation member in a sing body, having a rotation prevention portion at the outer circumference to correspond to the straight-line portion.

6. The load support apparatus of a driving room for a construction equipment according to claim 1 to claim 3, further comprising a sealing device including a cylinder boot which is elastic up and down, the cylinder boot being provided between the bottom frame of the driving room and the detachment prevention portion to maintain sealing of the driving room.

7. The load support apparatus of a driving room for a construction equipment according to claim 6, wherein the boot has a plurality of bellows which are elastic up and down.

8. The load support apparatus of a driving room for a construction equipment according to claim 6, wherein the boot is made of elastic material, an upper end of the boot being tightly fixed to an outer circumference of the detachment prevention portion and a lower end of the boot being tightly fixed to an inner circumference of a through hole of the bottom frame.

9. The load support apparatus of a driving room for a construction equipment according to claim 8, wherein the outer circumference of the detachment prevention portion and the inner circumference of the through hole of the bottom frame are flaked.

10. The load support apparatus of a driving room for a construction equipment according to claim 6, wherein the detachment prevention portion is provided with a groove at the outer circumference and the boot is provided with a protrusion at the inner side of the upper end so that the protrusion is inserted into the groove, and the bottom frame is further provided with a fitting member having an annular groove so that the lower end of the boot is fixed to the annular groove.

11. The load support apparatus of a driving room for a construction equipment according to claim 1, wherein the regulation member is provided at the outer side of the vibration damper.

12. The load support apparatus of a driving room for a construction equipment according to claim 1, wherein the quantity and the position of the regulation member are selectively determined depending on load condition.

13. A method for manufacturing a load support apparatus of a driving room for a construction equipment comprising the steps of:
fixing a fitting boss having a thread therein to the base of an upper frame of a vehicle frame provided with a first through hole in a single body by welding;
fixing a vibration damper, which elastically supports the driving room against the vehicle frame, to the vehicle frame;
fixing a bottom frame of the driving room provided with a third through hole to an upper portion of the vibration damper; and
inserting a regulation member into a third through hole and a first through hole in due order, the regulation member having a screw portion at one side and a detachment prevention portion at the other side, so that the screw portion is screwed onto a thread of the fitting boss.

14. The method for manufacturing a load support apparatus of a driving room for a construction equipment according to claim 13, further comprising the step of fixing a bottom plate provided with a second through hole between the step of fixing the vibration damper and the step of fixing the bottom frame of the driving room.

15. The method for manufacturing a load support apparatus of a driving room for a construction equipment according to claim 13 or claim 14, further comprising the step of providing a rotation prevention device including a fitting side fixed to one side of the vehicle frame and an extension side extended to the upper plate of the vehicle frame, the extension side having a groove with at least one straight line portion, and a cylinder shaped rotation prevention boss fixed between the screw portion of the regulation member and the detachment prevention portion in a sing body, having a rotation prevention portion at the outer circumference to correspond to the straight-line portion.

16. The method for manufacturing a load support apparatus of a driving room for a construction equipment according to claim 13 or claim 14, further comprising the step of providing a sealing device including a cylinder boot which is elastic up and down, the cylinder boot being provided between the bottom frame of the driving room and the detachment prevention portion to maintain sealing of the driving room.
